# EUROPEAN PATENT SPECIFICATION

(11) **EP 1 150 830 B1**
(45) Date of publication and mention of the grant of the patent: **16.04.2003**
(21) Application number: 99905660.9
(22) Date of filing: 03.02.1999
(51) Int. Cl.: B29D 30/24, B29D 30/42

(54) **ADJUSTABLE TIRE BUILDING CONTOUR DRUM AND METHOD OF BUILDING TIRE THEREON**
EINSTELLBARE REIFENAUFBAUTROMMEL UND REIFENHERSTELLUNGSVERFAHREN
TAMBOUR AVEC CONTOUR DE CONFECTION DE PNEU REGLABLE ET PROCEDE DE CONFECTION DE PNEU SUR CE TAMBOUR

(43) Date of publication of application: 07.11.2001
(73) Proprietor: THE GOODYEAR TIRE & RUBBER COMPANY, Akron, Ohio 44316-0001 (US)
(72) Inventor: FELTEN, Gilbert, Alphonse, L-1148 Luxembourg (LU)
(74) Representative: Leitz, Paul
(86) International application number: US9902269
(87) International publication number: WO00046018

(56) References cited:
- DE-A- 3 908 502
- GB-A- 2 253 818
- JP-A- 7 024 931
- US-A- 4 555 287
- US-A- 4 859 272

## Description

### TECHNICAL FIELD

This invention relates to a method of laminating tire components on a segmental tire building drum which has a plurality of circumferentially spaced, radially movable base segments, each of which has a secondary segment that is radially movable relative to the base segment. This construction provides a crowned surface on the drum to compensate for the thick edges of the components which are applied to the drum and for supporting each of the tire components as it is applied and spliced on the drum.

### BACKGROUND OF THE INVENTION

In building tire breaker/belt packages including breaker plies and belt plies, the breaker plies are cut to length and after application to the green tire carcass, butt spliced together. Preferably, each breaker ply is spliced on a cylindrical, flat surface. With conventional cylindrical tire building drums, this is not always possible because the edges of the breaker plies are surrounded by gum strips and as the breaker plies are applied and laminated, the diameter gauge difference between the edges and the center of the belt plies creates a concave surface instead of a cylindrical flat surface as needed for a satisfactory butt splice of the breaker plies. This problem, i.e. wherein the edges and center of the plies are of a different diameter, is of special concern in the efficient automated building of breaker/belt packages, where the breakers are precut to a predetermined length so they can be applied to the drum without stretching them.

In the past, expandable tire building drums have been proposed, such as that shown in U.S. Patent 4,129,927 ('927), where the drum shoulders have been adjustable. However, the drum disclosed in the '927 patent and other expandable drums known in the art have not disclosed adjusting the contour of the drum with center segments that can be repositioned during application of the various belt components in order to provide a flat application surface for each component in accordance with the present invention.

### OBJECTS OF THE INVENTION

An object of the present invention is to provide a tire building drum with an adjustable contour and a method of building a tire on the improved building drum as defined in one or more of the appended claims and, as such, having the capability of being constructed and used to accomplish one or more of the following subsidiary objects.

One object of the present invention is to provide a tire building drum with an adjustable contour and a method of using the drum to form a cylindrical flat surface that supports the tire components as they were applied and spliced on the drum.

### SUMMARY OF THE INVENTION

This invention relates to the construction of a tire building drum especially designed to laminate tire components, such as breaker plies, having thickened edges.

In accordance with one aspect of the invention, there is provided a tire building drum for laminating tire components including a plurality of circumferentially spaced, radially movable base segments. Each of the base segments has a radially movable secondary center segment and operative structure for moving the secondary center segment radially outward relative to each of the base segments a predetermined amount to compensate for an increase in thickness of the edges of the laminated tire components applied to the tire building drum.

In accordance with another aspect of the invention, the tire building drum with a plurality of circumferentially spaced, radially movable base segments has an inner cylindrical drum hub mounted for rotation and an outer cylindrical drum support disposed radially outward from the inner cylindrical drum hub and connected thereto by a circular support plate. Inflatable bladders are disposed between the base segments and the base drum support for urging the base segments radially outward. Each of the base segments has an end flange with an axially extending channel member for retaining a garter spring that extends around the drum hub to urge the base segments radially inward. The base segments also have stop flanges connected to the drum hub and engageable by each channel member for limiting the radially outward movement of each base segment. A nut member is slidably mounted in each base segment and fastened to the secondary center segment for moving the secondary center segment radially inward and outward. A multiple splined shaft member is rotatably mounted on the base segment and threaded in the nut member for radially moving the nut member and the secondary segment. The shaft member is slidably contained in a grooved sleeve member and engageable with a beveled ring slidably mounted on the drum hub. A first ring gear is connected to the beveled ring and is engageable with a spur gear on a shaft extending axially to a second spur gear engageable with gear teeth of positive drive belt pulleys. The latter drive belt pulleys are connected by a differential pulley, which in turn is driven by a servomotor in response to signals from an encoder.

In accordance with still another aspect of the invention, there is provided a method of laminating and splicing tire components having thickened edges on a tire building drum comprising the following steps. A first tire component is placed on a first flat cylindrical drum surface of the building drum of a first diameter and the ends are butt spliced together. The diameter of a center section of the cylindrical drum is increased to position the first tire component to form a second flat cylindrical application surface of a second diameter. A second tire component is placed on the second flat cylindrical surface and the opposite ends of the second component are butt spliced together. Next, the diameter of the center section of the drum is increased to position the second tire component to form a third flat cylindrical application surface of a third diameter. Then, a third tire component is placed on the third flat cylindrical surface and the ends of the third tire component are butt spliced together.

The method can also include the following steps. The first, second and third tire components are laminated together. The diameter of the tire building drum is decreased the laminated tire components are removed from the tire building drum.

Other objects, features and advantages of the invention will become apparent to those skilled in the are to which it pertains upon a reading and understanding of the following detailed description.

### BRIEF DESCRIPTION OF THE DRAWINGS

The structure, operation and advantages of the invention will become further apparent upon consideration of the following description taken in conjunction with the accompanying drawings, wherein:
**Figure 1** is a schematic illustration, partially in cross section, of a tire building drum embodying the invention and showing the base segments and the center segments in the expanded condition and the lower half showing the secondary center segment in the contracted position;
**Figure 2** is a partial, sectional view taken along the line **2-2** in **Figure 1,** with parts being broken away;
**Figure 3** is a plan view taken along the line **3-3** in **Figure 1** showing one of the base segments and a corresponding center segment; and
**Figures 4-9** are schematic cross sections of one of the base segments and a center segment showing the steps of applying the components of a breaker/belt package and illustrating the relative position of the center segment during the steps of building a tire.

### DETAILED DESCRIPTION OF THE INVENTION

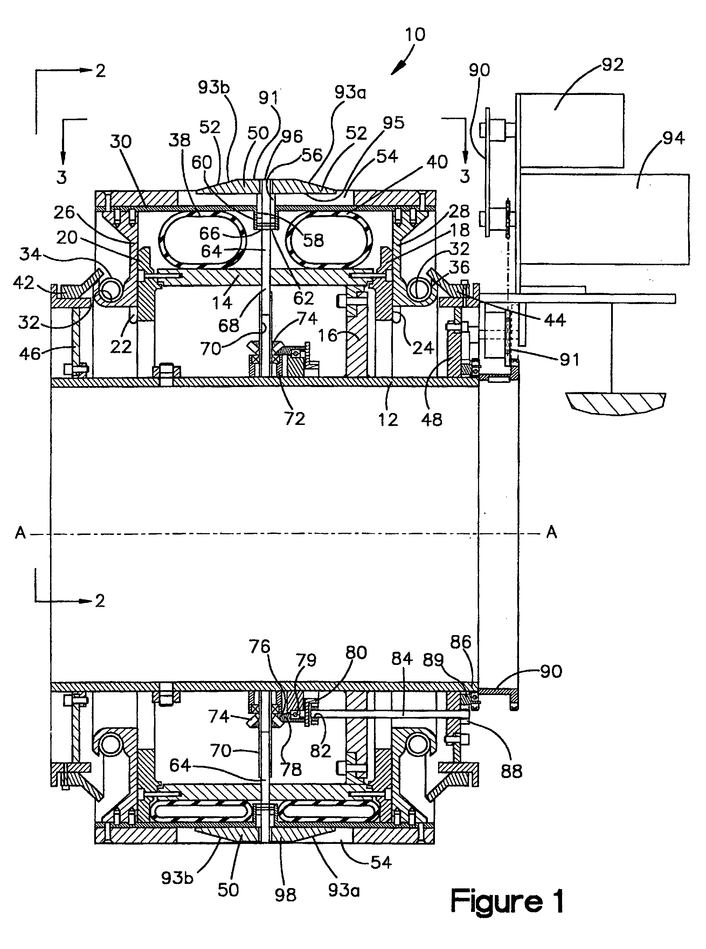

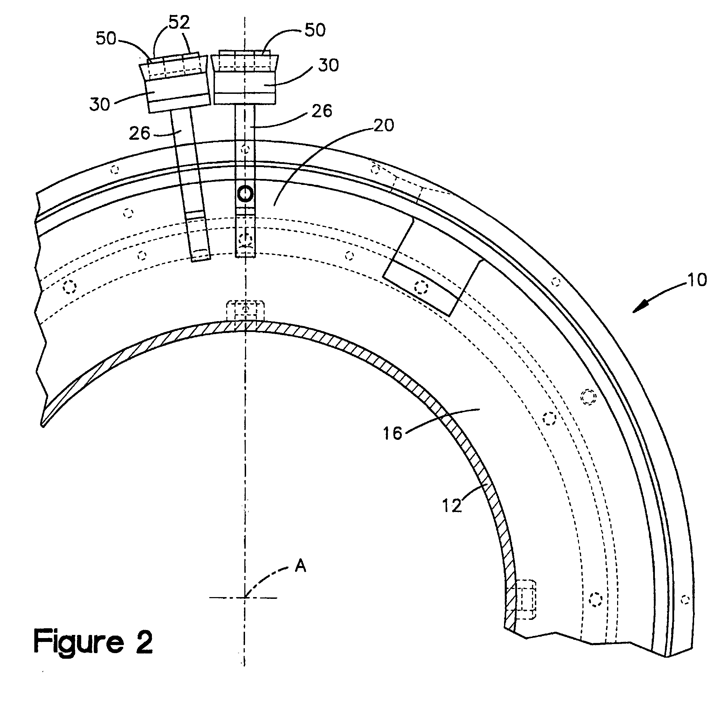

Referring to **Figures 1** and **2,** a tire building drum **10** is shown having a cylindrical drum hub **12** mounted for rotation about an axis A-A on a suitable housing (not shown). A cylindrical drum support **14** is bolted to a circular support plate **16,** which may be fastened to the drum hub **12** by any suitable means such as by welding. Circular end plate guides **18** and **20** are mounted on the drum support 14 and have slots **22** and **24** for receiving radially extending, end hooked pieces **26** and **28** of base segments **30.** Channels **32** and **33** at the inner diameter of the end pieces **26** and **28,** respectively, are provided for receiving garter springs **34** and **36** for urging the base segments **30** radially inward. Inflatable bladders **38** and **40,** which may be annular and in communication with the source of air pressure, are positioned between the drum support **14** and the base segments **30** to move the base segments radially outward. Stop flanges **42** and **44** are-mounted on flanges **46** and **48,** respectively, which in turn are fastened to the drum hub **12** for limiting the outward movement of the base segments 30.

In accordance with the present invention, secondary center segments **50** having arms **52a,52b** are removably attached in a slotted opening **54** in each of the base segments **30** by an attachment member, such as a nut member **56.** Each of the nut members **56** is slidably mounted in a cylindrical opening **58** in a base segment cup **60.** The cup **60** has a bottom plate **62** with an opening for a shaft **64** and a threaded portion (not shown) for engaging the threads (not shown) of the nut member **56** in a portion **65** of the interface of the cup and the nut member. Stop washers **66** prevent relative axial movement of the shaft **64** and the base segment **30.** The shaft **64** may also have a splined section **68** in sliding engagement with a grooved sleeve **70,** rotatably mounted in bearings **72a** and **72b.** The bearings **72a** and **72b** in turn are mounted on the drum hub **12** at circumferentially spaced apart positions corresponding to the circumferentially spaced base segments **30** and secondary center segments **50.**

As seen more clearly in the bottom half of **Figure 1,** each of the sleeves **70** has a beveled gear **74** engageable with a beveled gear teeth on a ring gear **78.** Gear **78,** in turn, is mounted against a bearing **79** for rotation about the drum hub **12** and has a second circular gear flange **80** with teeth engageable with a spur gear **82** mounted on a drum shaft **84.** Shaft **84** extends outwardly to an edge **86** of the drum hub **12** and is mounted to a second spur gear **88.** Gear **88,** in turn, is positioned for engagement with a conventional drive connection including a driven differential ring **89** connected by chain drive **91** to a differential pulley **90.** An encoder **92** and a servomotor **94** may be connected to the differential pulley **90.** The servomotor **94** rotates pulley **90** and differential ring **89** causing spur gear **88** to rotate shaft **84.** Shaft **84** then causes the ring gear **78** to rotate beveled gear **74** which in turn causes the sleeve **70** to rotate shaft **64.** This rotation of the shaft **64** of each of the secondary center segments **50** then causes the nut member **56**, which is threaded on the shaft, to move radially outward or inward from axis A-A as determined by the encoder **92** and direction of movement of servomotor **94.**

The nut members **56** have a removable clip connection **96** to quickly change secondary center segments **50** so as to provide different widths, different angles and different radial thicknesses for different tire building applications. Each of the secondary center segments **50** has a central flat surface **91,** side surfaces **93a,93b** and a bottom surface **95.** Preferably the secondary center segments **50** have a thickness at the center portion **98,** between outer surface **91** and bottom surface **95,** substantially equal to the depth of the slotted openings **54.** Further, side surfaces **93a,93b** of segments **50** are tapered outwardly from an initial greater central radius Rₛ with respect to the central axis A-A to a lesser radius R₂,R₃, etc. with respect to the central axis along the side surfaces **93a,93b** to provide a flat surface for the application of plies with thickened edges by moving center segments outward into the expanded condition.

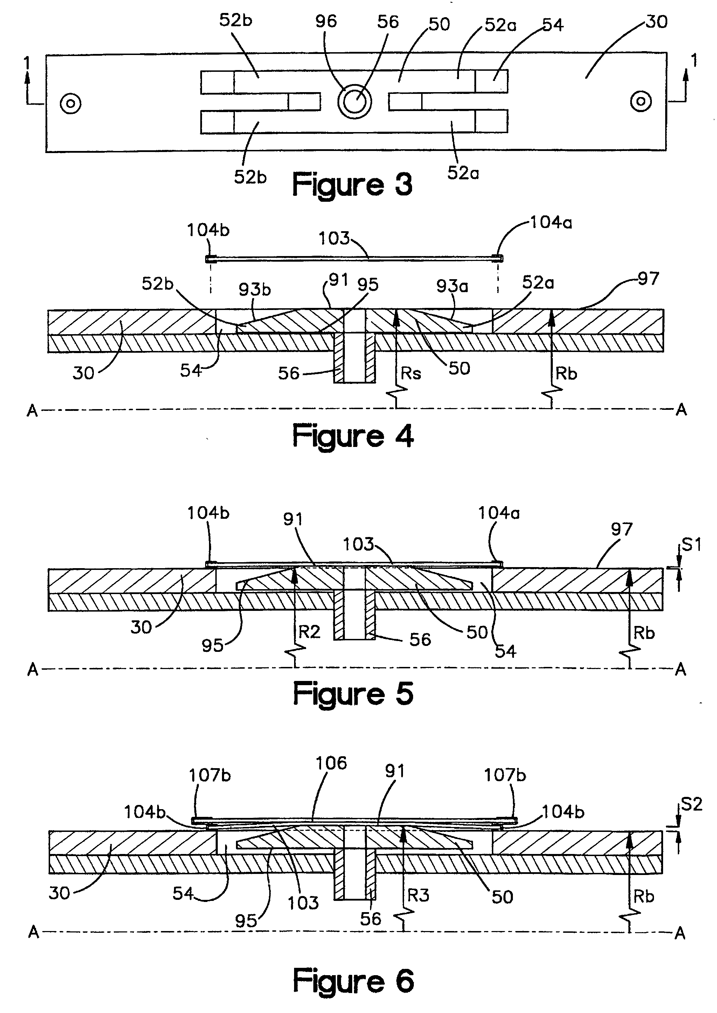

In operation, as illustrated in **Figures 4-9**, the tire components are laminated or applied, for example, in the following steps:

For example, as shown in **Figure 4,** the first tire components, such as a breaker ply **103** with edges thickened with gum strips **104a,104b** about either edge, is applied onto drum **10.** The secondary center segments **50** are in the retracted position, so that the radius Rs of the surface **91** of each of the secondary center segments **50** has a radius Rs substantially equal to the radius Rb of the base segments **30** to form a flat cylindrical drum surface **97.**

Referring to **Figure 5,** the shaft **64** is rotated, causing the nut members **56** to move radially outward and move the outer surface **91** of secondary center segments **50** to a location within a radius R2 equal to Rb + S1. This compensates for the thicker edges of breaker ply **103** so that the ply **103** forms a substantially cylindrical flat surface for applying the next tire component, which may be a breaker ply **106** having gum strips **107a,107b** wrapped around the ends thereof. It is important that breaker ply **106** be butt spliced on a flat surface which can now be accomplished since the center of breaker ply **103** has been moved to a radial position which is the same as that of the ends covered with gum strips **104a,104b.**

As long as the servomotor is not moving, drum differential pulley **90** will rotate drum hub **12** and the center segment **50** together. However, if motor **92** drives shaft **84,** as previously described, the center segment **50** can be moved radially inward or outward with respect to axis A-A.

As shown in **Figure 6,** the breaker ply **106** with gum strips **107a,107b** about either edge is applied onto breaker ply **103.** In order to compensate for the increased thickness caused by gum strips **107a,107b,** the secondary center segments **50** are moved an additional amount **52** radially outward so that outer surface **91** is at a radial location R3, where radius R3 equals Rb + S1 + S2 to shape ply **103** into a flat cylindrical surface for applying and splicing the ends of the second breaker ply **106.**

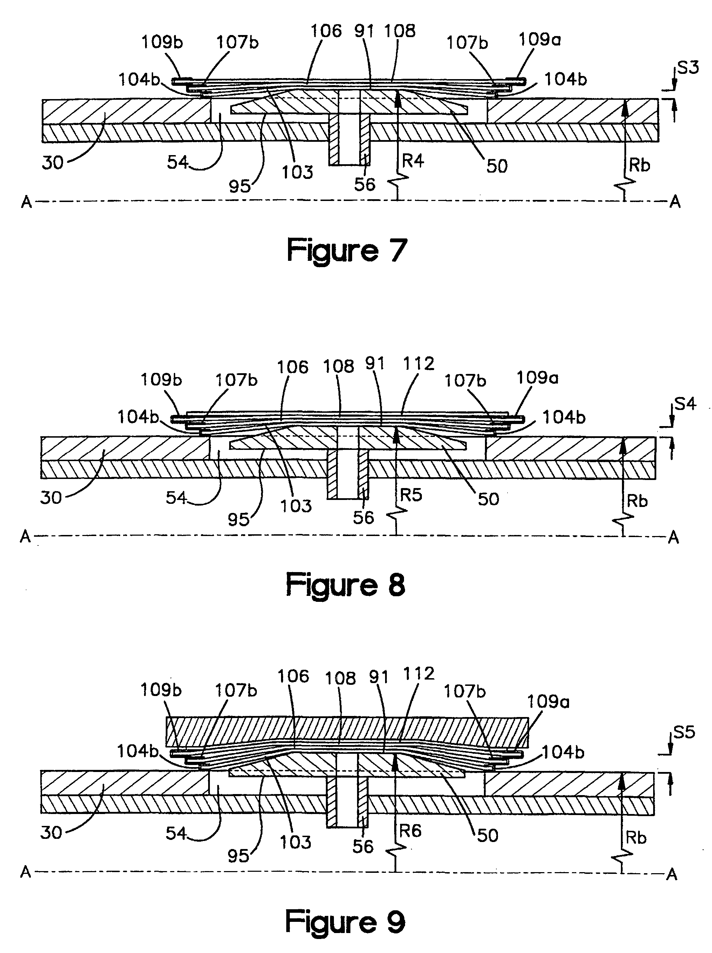

Referring to **Figure 7,** the second breaker ply **106** with edge strips **107a,107b** have been applied and a third breaker ply **108** with edge gum strips **109a,109b** is applied on the substantially flat cylindrical surface provided by increasing the radius of the secondary center segments **50** by a distance S3 so that radius R4 of top surface **91** is equal to Rb + S1 + S2 + S3.

Referring to **Figure 8,** the secondary center segments **50** are moved further radially outward a distance S4 so that Radius R5 of the top surface **91** is equal to Rb + S1 + S2 + S3 + S4 to provide a substantially flat cylindrical surface for applying a final tire component **112.**

Referring to **Figure 9,** it is desirable in the manufacture of certain tires to provide a crowned drum surface, against which the laminated assembly **114** that includes ply elements **103,106,108, and 112,** may be stitched as by conventional stitcher **116.** For this purpose, the secondary center segments **50** are moved outward a further radial distance S5, by rotating the shaft **64** a predetermined amount as determined by the encoder **92.** Then radius R6 of the top surface **91** of the center segments **50** is equal to Rb + S1 + S2 + S3 + S4 + S5.

After the laminated assembly **114** is stitched, the secondary center segments **50** may be retracted by rotating the shaft **64** of each of the secondary center segments in an opposite direction, retracting the segments back into a position as shown in **Figure 4,** whereupon the laminated assembly **114** may be removed from the tire building drum **10** as is conventionally known in the tire building art.

The preferred apparatus and methods have been described hereinabove. It will be apparent to those skilled in the art that the above apparatus and method may incorporate changes and modifications without departing from the general scope of this invention. It is intended to include all such modifications and alterations insofar as they come within the scope of the appended claims, or the equivalence thereof.

## Claims

1. A tire building drum (10) for laminating tire components having thickened edges, the drum having a plurality of circumferentially spaced, radially movable base segments (30), **characterized by** each of the base segments having a secondary center segment (50) which moves radially outward relative to the each of the base segments a predetermined amount to compensate for an increase in thickness of the edges of the tire components applied to the tire building drum (10).

2. The tire building drum (10) according to claim 1 further **characterized by** the secondary center segment (50) having a central flat cylindrical surface (91) and side surfaces (93a,93b) tapering from a central radius Rs with respect to the central axis A-A to a smaller radius with respect to the central axis along side surfaces (93a, 93b).

3. The tire building drum (10) according to claim 1 further **characterized by** each of the secondary center segments (50) being movable radially relative to their respective base segments (30) by an attachment member (56) fastened to the secondary center segments and threaded on a shaft (64) rotatable relative to the attachment member.

4. The tire building drum (10) according to claim 3 further **characterized by** a shaft (64) being rotatably mounted in the base segments (30) for rotational movement within the base segment.

5. The tire building drum (10) according to claim 4 further **characterized by** the shaft (64) having a section (68) slidably mounted in a sleeve (70) rotatably attached to a drum shaft (84), which in turn has a gear (88) operably engaged with a drive component (94) to cause rotation of shaft (64).

6. The tire building drum (10) according to claim 3 further **characterized by** the secondary center segment (50) removably fastened to the attachment member (56) to enable replacement of the segment.

7. A method of laminating and splicing tire components (103,106) having thickened edges on a tire building drum (10) comprising the steps of:
a) placing a first tire component (103) having thickened edges (104a,104b) on a building drum (10) having base segments (30) forming a cylindrical surface (97) of radius Rb with respect to center line A-A through the tire building drum (10) and secondary, radially movable retracted center segments (50) having a flat surface (91) in a retracted position whereby the surface (91) of the center segments has a radius Rs substantially equal to the radius Rb of the base segments;
b) butt splicing the ends of the first tire component (103); the method being **characterized by**:
c) moving the secondary center segments (50) radially outward a distance S1 defining thereby a cylindrical surface (91) at a location having a radius R2 with respect to axis A-A so as to provide on the surface of the first tire component (103) a flat cylindrical surface for applying at least a second tire component (106) having thickened edges (107a,107b); and
d) butt splicing the ends of the second tire component (106).

8. The method of claim 7 including the step of laminating at least the first and second tire components (103,106) together.

9. The method of claim 8 including the step of decreasing the radius of the surface (91) of the tire building drum (10) and removing the laminated tire components (103,106) from the tire building drum.

## Patentansprüche

1. Reifenaufbautrommel (10) zum Laminieren von Reifenkomponenten mit verdickten Kanten, wobei die Trommel mehrere in Umfangsrichtung beabstandete, radial bewegliche Basissegmente (30) besitzt, **dadurch gekennzeichnet, dass** jedes der Basissegmente ein sekundäres Mittelsegment (50) besitzt, das sich in Bezug auf jedes der Basissegmente um einen vorgegebenen Betrag radial nach außen bewegt, um eine erhöhte Dicke der Kanten der Reifenkomponenten, die auf die Reifenaufbautrommel (10) aufgebracht werden, auszugleichen.

2. Reifenaufbautrommel (10) nach Anspruch 1, ferner **dadurch gekennzeichnet, dass** das sekundäre Mittelsegment (50) eine mittige, ebene, zylindrische Oberfläche (91) und Seitenflächen (93a, 93b), die sich von einem Mittelradius Rs in Bezug auf die Mittelachse A-A zu einem kleineren Radius in Bezug auf die Mittelachse längs der Seitenflächen (93a, 93b) verjüngen, besitzt.

3. Reifenaufbautrommel (10) nach Anspruch 1, ferner **dadurch gekennzeichnet, dass** jedes der sekundären Mittelsegmente (50) relativ zu ihren jeweiligen Basissegmenten (30) durch ein Befestigungselement (56), das an den sekundären Mittelsegmenten befestigt ist und auf eine in Bezug auf das Befestigungselement drehbare Welle (64) geschraubt ist, radial beweglich ist.

4. Reifenaufbautrommel (10) nach Anspruch 3, ferner **gekennzeichnet durch** eine Welle (64), die in den Basissegmenten (30) drehbar angebracht ist, damit sie sich in dem Basissegment rotatorisch bewegen kann.

5. Reifenaufbautrommel (10) nach Anspruch 4, ferner **dadurch gekennzeichnet, dass** die Welle (64) einen Abschnitt (68) besitzt, der in einer Hülse (70) gleitend angebracht ist, die an einer Trommelwelle (84) drehbar befestigt ist, welche ihrerseits ein Zahnrad (88) besitzt, das mit einer Antriebskomponente (94) funktional in Eingriff ist, um eine Drehung der Welle (64) hervorzurufen.

6. Reifenaufbautrommel (10) nach Anspruch 3, ferner **dadurch gekennzeichnet, dass** das sekundäre Mittelsegment (50) an dem Befestigungselement (56) lösbar befestigt ist, um den Austausch des Segments zu ermöglichen.

7. Verfahren zum Laminieren und Verbinden von Reifenkomponenten (103, 106) mit verdickten Kanten auf einer Reifenaufbautrommel (10), das die Schritte umfasst, bei denen:
a) eine erste Reifenkomponente (103) mit verdickten Kanten (104a, 104b) auf einer Aufbautrommel (10) angeordnet wird, die Basissegmente (30), die eine zylindrische Oberfläche (97) mit einem Radius (Rb) in Bezug auf die Mittellinie A-A durch die Reifenaufbautrommel (10) bilden, und sekundäre, radial bewegliche, eingefahrene Mittelsegmente (50), die in einer eingefahrenen Stellung eine ebene Oberfläche (91) besitzen, umfasst, wobei die Oberfläche (91) der Mittelsegmente einen Radius (Rs) hat, der im Wesentlichen gleich dem Radius (Rb) der Basissegmente ist; und
b) die Enden der ersten Reifenkomponente (103) mit Stoß verbunden werden;
wobei das Verfahren **dadurch gekennzeichnet ist, dass**
c) die sekundären Mittelsegmente (50) um eine Strecke (S1) radial nach außen bewegt werden, wodurch eine zylindrische Oberfläche (91) an einem Ort mit einem Radius (R2) in Bezug auf die Achse A-A definiert wird, um so auf der Oberfläche der ersten Reifenkomponente (103) eine ebene, zylindrische Oberfläche zu schaffen, um wenigstens eine zweite Reifenkomponente (106) mit verdickten Kanten (107a, 107b) aufzubringen; und
d) die Enden der zweiten Reifenkomponente (106) mit Stoß verbunden werden.

8. Verfahren nach Anspruch 7, das den Schritt umfasst, bei dem wenigstens die ersten und zweiten Reifenkomponenten (103, 106) miteinander laminiert werden.

9. Verfahren nach Anspruch 8, das den Schritt umfasst, bei dem der Radius der Oberfläche (91) der Reifenaufbautrommel (10) verringert wird und die laminierten Reifenkomponenten (103, 106) von der Reifenaufbautrommel abgenommen werden.

## Revendications

1. Tambour de confection de bandage pneumatique (10) pour stratifier des composants de bandages pneumatiques possédant des bords épaissis, le tambour possédant plusieurs segments de base (30) espacés en direction circonférentielle et mobiles en direction radiale, **caractérisé par le fait que** chacun desdits segments de base possède un segment central secondaire (50) qui se déplace vers l'extérieur en direction radiale par rapport à chacun des segments de base sur une distance prédéterminée pour compenser une augmentation de l'épaisseur des bords des composants du bandage pneumatique appliqués sur le tambour de confection de bandage pneumatique (10).

2. Tambour de confection de bandage pneumatique (10) selon la revendication 1, **caractérisé en outre par le fait que** le segment central secondaire (50) possède une surface cylindrique plate centrale (91) et des surfaces latérales (93a, 93b) présentant une conicité à partir d'un rayon central Rs par rapport à l'axe central A - A jusqu'à un rayon inférieur par rapport à l'axe central le long des surfaces latérales (93a, 93b).

3. Tambour de confection de bandage pneumatique (10) selon la revendication 1, **caractérisé en outre par le fait que** chacun des segments centraux secondaires (50) est mobile en direction radiale par rapport à son segment de base respectif (30) via un élément de fixation (56) fixé aux segments centraux secondaires et vissé sur un arbre (64) rotatif par rapport à l'élément de fixation.

4. Tambour de confection de bandage pneumatique (10) selon la revendication 3, **caractérisé en outre par** un arbre (64) monté en rotation dans les segments de base (30) pour effectuer un mouvement rotatif à l'intérieur des segments de base.

5. Tambour de confection de bandage pneumatique (10) selon la revendication 4, **caractérisé en outre par le fait que** l'arbre (64) possède une section (68) montée en coulissement dans un manchon (70) fixé en rotation à l'arbre (84) du tambour, celui-ci possédant à son tour un engrenage (88) qui vient s'engrener de manière fonctionnelle avec un composant d'entraînement (94) dans le but de déclencher la rotation de l'arbre (64).

6. Tambour de confection de bandage pneumatique (10) selon la revendication 3, **caractérisé en outre par le fait que** le segment central secondaire (50) est fixé de manière amovible à l'élément de fixation (56) pour permettre le remplacement du segment.

7. Procédé de stratification et de soudure de composants de bandage pneumatique (103, 106) comportant des bords épaissis sur un tambour de confection de bandage pneumatique (10), comprenant les étapes consistant à :
a) placer un premier composant de bandage pneumatique (103) possédant des bords épaissis (104a, 104b) sur un tambour de confection (10) comportant des segments de base (30) formant une surface cylindrique (97) de rayon Rb par rapport à la ligne médiane A - A s'étendant à travers le tambour de confection de bandage pneumatique (10) et des segments centraux secondaires rétractés (50) mobiles en direction radiale, possédant une surface plate (91) à l'état rétracté, la surface (91) des segments centraux possédant un rayon Rs essentiellement égal au rayon Rb des segments de base ;
b) mettre en oeuvre une soudure bout à bout des extrémités du premier composant de bandage pneumatique (103) ;
le procédé étant **caractérisé par** le fait de :
c) déplacer les segments centraux secondaires (50) en direction radiale vers l'extérieur sur une distance S1 pour ainsi définir une surface cylindrique (91) à un endroit correspondant à un rayon R2 par rapport à l'axe A - A de façon à obtenir, sur la surface du premier composant de bandage pneumatique (103), une surface cylindrique plate pour appliquer au moins un deuxième composant de bandage pneumatique (106) possédant des bords épaissis (107a, 107b) ; et
d) mettre en oeuvre une soudure bout à bout des extrémités du deuxième composant de bandage pneumatique (106).

8. Procédé selon la revendication 7, englobant les étapes consistant à stratifier au moins les premier et deuxième composants de bandage pneumatique (103, 106) l'un à l'autre.

9. Procédé selon la revendication 8, englobant l'étape consistant à réduire le rayon de la surface (91) du tambour de confection de bandage pneumatique (10) et à retirer les composants de bandage pneumatique stratifiés (103, 106) du tambour de confection de bandage pneumatique.
